Europäisches Patentamt

European Patent Office

Office européen des brevets

(11) Publication number : **0 512 851 A2**

# (12) EUROPEAN PATENT APPLICATION

(21) Application number : **92304157.8**

(51) Int. Cl.$^5$ : **C08L 23/20**

(22) Date of filing : **08.05.92**

(30) Priority : **09.05.91 JP 104223/91**

(43) Date of publication of application :
**11.11.92 Bulletin 92/46**

(84) Designated Contracting States :
**BE DE FR GB**

(71) Applicant : **SUMITOMO CHEMICAL COMPANY, LIMITED**
**5-33 Kitahama 4-chome Chuo-ku**
**Osaka-shi Osaka (JP)**

(72) Inventor : **Kakugo, Masahiro**
**4-1096-17, Mimomi-cho**
**Narashino-shi, Chiba (JP)**
Inventor : **Miyatake, Tatsuya**
**1-9, Yushudainishi,**
**Ichihara-shi, Chiba (JP)**
Inventor : **Wakamatsu, Kazuki**
**6-11-13, Nagauraekimae**
**Sodegaura-shi, Chiba (JP)**
Inventor : **Watanabe, Kazuhiro**
**1-9, Yushudainishi**
**Ichihara-shi, Chiba (JP)**
Inventor : **Nakata, Mikitoshi**
**135, Iriyamazu**
**Ichihara-shi, Chiba (JP)**

(74) Representative : **Diamond, Bryan Clive et al**
**Gee & Co., Chancery House, Chancery Lane**
**London WC2A 1QU (GB)**

(54) Crystalline poly-4-methyl-1-pentene polymer composition.

(57)    A crystalline poly-4-methyl-1-pentene composition comprises poly-4-methyl-1-pentene having incorporated therein a polymer of a compound represented by
$$CH_2=CH(CH_2)_nR \qquad (I)$$
wherein R represents a cyclic hydrocarbon group and n is an integer of from 0 to 10, e.g., vinylcyclohexane and its derivatives, in an amount corresponding to 0.05 to 10000 ppm by weight of the monomer unit derived from the compound represented by formula (I).
    Methods of preparing the incorporated polymer (I) and of incorporating it are disclosed. The composition can be molded or formed to shape.
    The composition has a high rate of crystallization and a high crystallization temperature.

EP 0 512 851 A2

This invention relates to a crystalline poly-4-methyl-1-pentene composition having a high rate of crystallization and a high crystallization temperature.

Poly-4-methyl-1-pentene is a crystalline resin characterized by having also the advantages of an amorphous resin. That is, it is highly transparent and highly heat-resistant while exhibiting chemical resistance, electrical characteristics and ease of molding. However, it has a disadvantage of low crystallinity and thereby has low heat resistance under a high load.

An object of the present invention is to provide a crystalline poly-4-methyl-1-pentene composition having a high rate of crystallization and a high crystallization temperature.

According to the present invention we provide a crystalline poly-4-methyl-1-pentene composition comprising poly-4-methyl-1-pentene having incorporated therein a polymer of a compound represented by formula (I):

$$CH_2=CH(CH_2)_nR \qquad (I)$$

wherein R represents a cyclic hydrocarbon group; and $n$ is an integer of from 0 to 10,

in an amount corresponding to 0.05 to 10,000 ppm by weight of the monomer unit derived from the compound represented by formula (I).

Specific examples of the compound represented by formula (I) include those having a saturated cyclic hydrocarbon group, e.g., vinylcyclohexane, vinyl-2-methylcyclohexane, vinyl-3-methylcyclohexane or allylcyclohexane; and those having a cyclic hydrocarbon group containing a double bond, e.g., 4-vinylcyclohexene-1, 4-vinyl-2-methylcyclohexene-1, styrene or $\alpha$-methylstyrene. Preferred of these are vinylcyclohexane and its derivatives.

The compound of formula (I) is incorporated into crystalline poly-4-methyl-1-pentene in the form of a polymer thereof (hereinafter referred to as polymer (A)). Polymer (A) includes a homopolymer of the compound of formula (I), copolymers of the compounds of formula (I) of different kinds, and copolymers of the compound(s) of formula (I) and one or more $\alpha$-olefin, e.g., ethylene or propylene, having a given content of the monomer unit derived from the compound of formula (I).

In using a compound of formula (I) having a cyclic hydrocarbon group containing a double bond, e.g., styrene or $\alpha$-methylstyrene, a polymer thereof which has been subjected to nuclear hydrogenation so as to convert its unsaturated cyclic hydrocarbon group to a saturated one, e.g., a cyclohexane ring, is also useful as polymer (A).

Polymer (A) is preferably prepared by polymerization in a solvent, e.g., butane, hexane, heptane, benzene or toluene, in the presence of a Ziegler-Natta catalyst providing an isotactic polymer at a temperature of from 20° to 100° under a pressure of from atmospheric pressure to 100 kg/cm². Polymers (A) obtained by anionic polymerization, cationic polymerization or radical polymerization may also be used.

Catalysts which can be used in the preparation of polymer (A) preferably include Ziegler-Natta catalysts giving an isotactic polymer. Examples of suitable Ziegler-Natta catalysts include titanium trichloride catalysts sold by, e.g., Toyo Staufer Co., Ltd., Toho Titanium Co., Ltd., and Marubeni Solvay Co., Ltd.; and catalyst systems composed of a solid catalyst component containing a halogen, magnesium, and titanium and an organoaluminum compound as described in JP-A-57-59916, JP-A-55-133408, JP-A-62-238184 and JP-A-63-142003 (the term "JP-A" as used herein means an unexamined published Japanese patent application).

The organoaluminum compound preferably includes alkylaluminum compounds represented by formula: $AlX_aR_{3-a}$, wherein X represents a halogen atom, an alkoxy group, or a hydrogen atom; R represents an alkyl group having from 1 to 18 carbon atoms; and $a$ is a number of from 0 to 3. Specific examples of such alkylaluminum compounds are $Al(CH_3)_3$, $Al(CH_3)_2Cl$, $Al(CH_3)_2Br$, $Al(CH_3)_2(OC_2H_5)$, $Al(C_2H_5)_3$, $Al(C_2H_5)_2Cl$, $Al(C_2H_5)_2Br$, $Al(C_2H_5)_2(OC_2H_5)$, $Al(C_2H_5)_2(OC_4H_9)$, $Al(C_2H_5)(OC_4H_9)_2$, $Al(C_2H_5)Cl_2$, $Al(C_4H_9)_3$, $Al(C_4H_9)_2Cl$, $Al(C_6H_{13})_3$, and $Al(C_6H_{13})_2Cl$, and mixtures thereof.

In order to obtain polymer (A) with improved stereo-specificity, an electron donor, such as a carboxylic acid ester, phosphoric acid ester or silicic acid ester, may be added to the polymerization system.

The process for preparing polymer (A) by using the above mentioned Ziegler-Natta catalysts includes the following embodiments:

(1) A homopolymer of a compound of formula (I) is obtained.

(2) A copolymer of compounds of formula (I) of different kinds is obtained.

(3) In a first step, the compound of formula (I) is polymerized, and in a second step, 4-methyl-1-pentene is homopolymerized or copolymerized with a 1-olefin.

(4) In a first step, 4-methyl-1-pentene is homopolymerized or copolymerized with a 1-olefin, and in a second step, the compound of formula (I) is polymerized.

(5) In a first step, 4-methyl-1-pentene is homopolymerized, in a second step, the compound of formula (I) is polymerized, and in a third step, 4-methyl-1-pentene is homopolymerized or copolymerized with a 1-olefin.

(6) Polystyrene obtained by emulsion polymerization, suspension polymerization or bulk polymerization may be employed. Further, the thus prepared polystyrene may be hydrogenated while dissolved in a solvent (e.g., cyclohexane) in a concentration of about 5% by weight in the presence of a catalyst (e.g., Raney nickel, palladium, ruthenium, or platinum) at 50° to 300°C under a hydrogen pressure of from atmospheric pressure to 200 kg/cm² to convert its unsaturated ring to a cyclohexane ring.

Poly-4-methyl-1-pentene can be prepared by polymerization in the presence of the same Ziegler-Natta catalysts as used in the preparation of polymer (A).

Poly-4-methyl-1-pentene includes not only a homopolymer of 4-methyl-1-pentene but copolymers of 4-methyl-1-pentene and ethylene, propylene, butene, pentene-1, n-hexene-1, n-octyne-1, n-decene-1, n-octadecene-1 or 3-methyl-butene-1. The polymerization can be carried out in a solvent, e.g., butane, hexane, heptane, octane, benzene, toluene, xylene or cyclohexane, at a temperature of from 30° to 100°C.

The composition comprising poly-4-methyl-1-pentene and polymer (A) can be prepared by blending methods commonly employed for general 1-olefin polymer blends, for example, a method comprising melt-kneading the two polymers, both in a powdered or pelletized form or one in a powdered form and the other in a pelletized form, in a Henschel mixer, a Banbury mixer, a roll or a granulator, a method comprising mixing the two polymers both in a dissolved state, and a method in which the above-described method (1), (2), (3), (4) or (5) is followed by homo- or copolymerization of 4-methyl-1-pentene. The last method described is suitable for obtaining a uniform composition of poly-4-methyl-1-pentene and polymer (A).

Where polymer (A) obtained by method (2), (3) or (4) is used, it is recommended that polymer (A) be so prepared by having a controlled proportion of the monomer unit derived from the compound of formula (1) so that it is used with ease in the preparation of the composition.

The content of polymer (A) in the poly-4-methyl-1-pentene composition is such that the monomer unit derived from the compound of formula (I) is present in an amount of from 0.05 to 10,000 ppm by weight, and preferably from 500 to 10,000 ppm by weight. If the monomer unit content is less than 0.05 ppm by weight, no improving effect on crystallinity can be obtained. Even if it exceeds 10,000 ppm by weight, no appreciable increase in the improving effect is obtained.

If desired, the crystalline poly-4-methyl-1-pentene composition containing polymer (A) may further contain any kinds of additives usually compounded into poly-4-methyl-1-pentene, such as heat stabilizers, light stabilizers, antistatic agents, antioxidants, carbon black, pigments or flame retarders; and fillers, such as mica or talc.

The crystalline poly-4-methyl-1-pentene composition according to the present invention can be molded or formed into a wide variety of articles, such as sheeting, films, containers and fibers, by well-known techniques, such as injection molding, pressure molding, vacuum molding, extrusion molding, blow molding and stretching.

The present invention is now illustrated in greater detail by way of Examples, wherein the parts are by weight.

In the Examples, the rate of crystallization was evaluated through comparison of crystallization temperature between the composition prepared and the corresponding poly-4-methyl-1-pentene containing no polymer (A). A sample with a high crystallization temperature was considered to have a higher rate of crystallization. The crystallization temperature was measured with a differential scanning calorimeter (DSC) with a decrease in temperature from 250°C at a cooling rate of 4°C/min.

## EXAMPLE 1

### 1) Preparation of Polymer (A):

To 100 ml of dehydrated and purified n-heptane were added successively 1.95 g of triethylaluminum, 675 mg of ethyl p-anisate, and 6.0 g of a titanium compound catalyst comprised of n-butylmagnesium chloride, silicon tetrachloride, $Ti(OC_2H_5)_{0.5}$-$Cl_{2.5}$, and ethyl benzoate which was prepared according to Example 1 of JP-A-57-59916, and the resulting mixed solution was heated to 50°C. Then, 50 ml of vinylcyclohexane was added thereto to conduct polymerization of vinylcyclohexane for 3 hours.

The resulting polymerization slurry was washed four times with 200 mℓ portions of n-heptane to remove the unreacted vinylcyclohexane as well as triethylaluminum and ethyl p-anisate used as co-catalysts. The still active slurry having been washed with n-heptane was distilled under reduced pressure to remove n-heptane to recover 7.8 g of polyvinylcyclohexane containing the catalyst remaining active as powdered polymer (A). The polymer yield per gram of the titanium compound catalyst charged was 0.30 g.

### 2) Preparation of Composition:

In a 5-ℓ stainless steel autoclave were charged 1.06 g of polymer (A) containing the still active polymerization catalyst having vinylcyclohexane polymerized therewith as obtained in (1) above, 0.75 g of triethylaluminum, 0.23 g of ethyl panisate, 500 mℓ of 4-methyl-1-pentene, and 1500 mℓ of n-heptane, and polymerization of 4-methyl-1-pentene was conducted at 70°C at a hydrogen concentration of 1.5% by volume for 40 minutes. After completion of the polymerization, 50 mℓ of n-butanol was added thereto to stop the polymerization. The polymerization slurry was taken out and separated into a powdered polymer and the solvent by filtration. The powdered polymer weighed 245 g after drying. The poly-4-methyl-1-pentene yield per gram of the titanium compound catalyst was 300 g. The vinylcyclohexane content in the resulting copolymer powder was found to be 978 ppm as calculated from the poly-4-methyl-1-pentene yield per unit catalyst weight.

The resulting poly-4-methyl-1-pentene composition had a crystallization temperature of 217°C.

EXAMPLE 2

1) Preparation of Polymer (A):

To a mixture of 10 mℓ of n-hexane and 5 g of vinylcyclohexane were added 0.157 g of titanium trichloride (a product of Marubeni Solvay Co., Ltd.) and 0.3 g of triethyl-aluminum, and polymerization of vinylcyclohexane was conducted at 50°C for 45 minutes. After completion of the polymerization, n-butanol was added to the reaction system to stop the polymerization. The polymerization mixture was washed with methanol having been rendered acidic with hydrochloric acid, to obtain 0.1 g of polyvinylcyclohexane.

2) Preparation of 4-Methyl-1-pentene Homopolymer:

In a 3-ℓ stainless steel autoclave equipped with a stirrer was purged with argon, and 250 mℓ of dried n-heptane, 1,000 mℓ of 4-methyl-1-pentene, 0.11 mmole of triethyltriethoxysilane, and 54.5 mg of a solid catalyst synthesized according to Example 1 of JP-A-63-142003 were charged therein. Hydrogen was introduced into the reaction system to a partial pressure of 0.33 kg/cm².

The temperature of the system was elevated to 60°C to conduct polymerization for 4 hours. The polymerization was stopped by addition of 50 mℓ of isobutyl alcohol. The slurry was filtered, and the filter cake was washed with 1,000 mℓ of n-heptane. The resulting solid polymer was dried under reduced pressure at 80°C for 4 hours to obtain 280.0 g of a 4-methyl-1-pentene homopolymer.

3) Preparation of Composition:

The polyvinylcyclohexane obtained in (1) above, 20 g of the 4-methyl-1-pentene homopolymer powder obtained in (2) above, and, as stabilizers, 0.05 part of calcium stearate, 0.2 part of 2,6-di-t-butylhydroxytoluene (BHT), and 0.005 part of tetrakis-[methylene-3-(3′,5′-di-t-butyl-4-hydroxyphenyl)propionato]-methane were kneaded in a granulator to obtain pellets. The resulting composition had a crystallization temperature of 222°C.

COMPARATIVE EXAMPLE 1

The 4-methyl-1-pentene homopolymer used in Example 1 or 2 had a crystallization temperature of 214°C.

EXAMPLE 3

1) Preparation of 4-Methyl-1-pentene/n-Decene-1 Copolymer:

A 3-ℓ stainless steel autoclave was purged with argon, and 15.3 mg of a solid catalyst synthesized according to Example 1 of JP-A-63-142003, 2.2 mmole of an alkylaluminum amide compound, 1,000 mℓ of 4-methyl-1-pentene, and 2.5 mℓ of n-decene-1 were charged therein. The temperature was raised to 60°C to commence polymerization. Polymerization was continued for 2.5 hours while feeding 5 mℓ/hr of n-decene-1. The polymerization was stopped by addition of 50 mℓ of isobutyl alcohol. The slurry was filtered, and the filter cake was washed with 1,000 mℓ of n-heptane to obtain a solid polymer, which was then dried under reduced pressure at 80°C for 4 hours to obtain 286 g of a copolymer comprising 4-methylpentene-1 and n-decene-1 having an n-decene-1 content of 2.2%.

2) Preparation of Composition:

Two hundred grams of the 4-methyl-1-pentene/n-decene-1 copolymer powder obtained in (1) above and 0.62 g of polyvinylcyclohexane obtained in Example 2 were kneaded in a granulator together with the same stabilizers as used in Example 2. The resulting composition had a crystallization temperature of 211°C.

EXAMPLE 4

In the same manner as in Example 3, except for using n-octene-1 in place of n-decene-1, 315 g of a poly-4-methyl-1-pentene/n-octene-1 copolymer having an n-octene-1 content of 3.1% was prepared. Two hundred grams of the resulting copolymer powder were kneaded with 0.7 g of a polyvinylcyclohexane powder in the same manner as in Example 2 to obtain a composition. The composition had a crystallization temperature of 212°C.

COMPARATIVE EXAMPLES 2 AND 3

The poly-4-methyl-1-pentene/n-decene-1 copolymer alone prepared in Example 3 and the poly-4-methyl-1-pentene/n-octene-1 copolymer alone prepared in Example 4 had a crystallization temperature of 207°C and 201°C, respectively.

The results of Examples 1 to 4 and Comparative Examples 1 to 3 are shown in Table 1 below.

TABLE 1

| Example No. | Amount of Poly-vinylcyclohexane (wt ppm) | Crystallization Temperature (°C) |
|---|---|---|
| Example 1 | 978 | 217 |
| Example 2 | 5,000 | 222 |
| Example 3 | 3,100 | 211 |
| Example 4 | 3,500 | 212 |
| Comparative Example 1 | – | 214 |
| Comparative Example 2 | – | 207 |
| Comparative Example 3 | – | 201 |

As described above, the crystalline poly-4-methyl-1-pentene composition according to the present invention has a higher crystallization temperature than a 4-methyl-1-pentene homopolymer or copolymer.

**Claims**

1. A crystalline poly-4-methyl-1-pentene composition comprising poly-4-methyl-1-pentene having incorporated therein a polymer of a compound represented by formula (I):

$$CH_2=CH(CH_2)_{2n}R \qquad (I)$$

wherein R represents a cyclic hydrocarbon group; and n is an integer of from 0 to 10, in an amount corresponding to 0.05 to 10,000 ppm by weight of the monomer unit derived from the compound represented by formula (I).

2. A crystalline poly-4-methyl-1-pentene composition as claimed in Claim 1, wherein said compound represented by formula (I) is vinylcylohexane or a derivative thereof.

3. A crystalline poly-4-methyl-1-pentene composition as claimed in Claim 1 or 2, wherein said composition contains from 500 to 10,000 ppm by weight of the monomer unit derived from the compound represented by formula (I).